# EUROPEAN PATENT APPLICATION

(11) **EP 4 838 961 A1**
(43) Date of publication of application: **11.11.2026**
(21) Application number: 24916679.4
(22) Date of filing: 17.12.2024
(51) Int. Cl.: H04W 48/18

(54) **VIRTUAL NETWORK GROUP CONFIGURATION METHOD, DEVICE, AND STORAGE MEDIUM**

(30) Priority: 08.01.2024 CN 202410029703
(71) Applicant: ZTE CORPORATION, Shenzhen, Guangdong 518057 (CN)
(72) Inventor: ZHANG, Zhijian, Shenzhen, Guangdong 518057 (CN)
(74) Representative: Ziebig Hengelhaupt Intellectual Property Attorneys Patentanwaltskanzlei PartGmbB
(86) International application number: PCT/CN2024/139835
(87) International publication number: WO 2025/148632

(57) **Abstract**

The present application discloses a virtual network group configuration method, a device, and a storage medium. The method comprises: receiving service information sent by a terminal, and obtaining a virtual network group list subscribed by the terminal, wherein the service information is associated with a first target virtual network group selected by the terminal; and on the basis of the service information, determining a second target virtual network group corresponding to the terminal from the virtual network group list, and generating packet forwarding policy information based on the second target virtual network group for the terminal. Thus, the packet forwarding policy information can be added to the second target virtual network group, to enable the terminal to communicate and interact with other terminals in the second target virtual network group.

## Description

### CROSS REFERENCE TO RELATED APPLICATIONS

This application claims priority to Chinese Patent Application No. 202410029703.0 filed on January 08, 2024, entitled "Virtual Network Group Configuration Method, Device, and Storage Medium", the entirety of which is incorporated herein by reference.

### TECHNICAL FIELD

The present application relates to the technical field of communications, and in particular to a virtual network group configuration method, a device, and a storage medium.

### BACKGROUD

When a terminal accesses a 5G LAN (Local Area Network), a UDM (Unified Data Management) typically issues a virtual network group list subscribed by the terminal to an SMF (Session Management Function), and the SMF randomly selects one virtual network group from the virtual network group list as the virtual network group to be joined by the terminal.

The terminal can perform communication only via the virtual network group randomly configured by the SMF, and such virtual network group configuration scheme is low in configuration flexibility.

### SUMMARY

The main objective of the present application is to provide a virtual network group configuration method, device, and storage medium.

The present application provides a virtual network group configuration method, the virtual network group configuration method includes the following steps: receiving service information from a terminal, and obtaining a virtual network group list subscribed by the terminal, wherein the service information is associated with a first target virtual network group selected by the terminal; determining, based on the service information, a second target virtual network group corresponding to the terminal from the virtual network group list, and generating packet forwarding policy information based on the second target virtual network group for the terminal; and adding the packet forwarding policy information to the second target virtual network group, wherein the second target virtual network group to which the packet forwarding policy information is added is used by the terminal to communicate and interact with another terminal.

The present application further provides a virtual network group configuration device, the virtual network group configuration device includes: a receiving module, configured to receive service information from a terminal, and obtain a virtual network group list subscribed by the terminal, wherein the service information is associated with a first target virtual network group selected by the terminal; a generation module, configured to determine, based on the service information, a second target virtual network group corresponding to the terminal from the virtual network group list, and generate packet forwarding policy information based on the second target virtual network group for the terminal; and an adding module, configured to add the packet forwarding policy information to the second target virtual network group, wherein the second target virtual network group to which the packet forwarding policy information is added is used by the terminal to communicate and interact with another terminal.

The present application further provides a virtual network group configuration device, the virtual network group configuration device includes a memory, a processor, and a virtual network group configuration program stored in the memory and executable on the processor, the virtual network group configuration program is configured to implement steps of the virtual network group configuration method as described above.

The present application further provides a computer-readable storage medium, the computer-readable storage medium stores thereon a virtual network group configuration program, the computer program, when executed by a processor, implements steps of the virtual network group configuration method as described above.

### BRIEF DESCRIPTION OF THE DRAWINGS

FIG. 1 is a schematic diagram of a core network architecture for 5G communication services according to embodiments of the present application.
FIG. 2 is a schematic flowchart of an interaction process for determining a virtual network group by an SMF according to embodiments of the present application.
FIG. 3 is a schematic flowchart of a first embodiment of a virtual network group configuration method of the present application.
FIG. 4 is a schematic flowchart of a second embodiment of a virtual network group configuration method of the present application.
FIG. 5 is a schematic flowchart of a third embodiment of a virtual network group configuration method of the present application.
FIG. 6 is a schematic flowchart of an interaction process for determining a virtual network group by an UPF according to embodiments of the present application.
FIG. 7 is a schematic flowchart of an interaction process for precisely selecting a virtual network group according to embodiments of the present application.
FIG. 8 is a schematic flowchart of a fourth embodiment of a virtual network group configuration method of the present application.
FIG. 9 is a schematic flowchart of an interaction process for switching a virtual network group according to embodiments of the present application.
FIG. 10 is a structural block diagram of an embodiment of a virtual network group configuration device of the present application.
FIG. 11 is a schematic structural diagram of a hardware operating environment of a device according to embodiments of the present application.

The implementation of the objects, functional features and advantages of the present application will be further illustrated with reference to the accompanying drawings in conjunction with embodiments.

### DETAILED DESCRIPTION

It should be understood that the specific embodiments described here are merely used to illustrate the present application and not intended to be limiting.

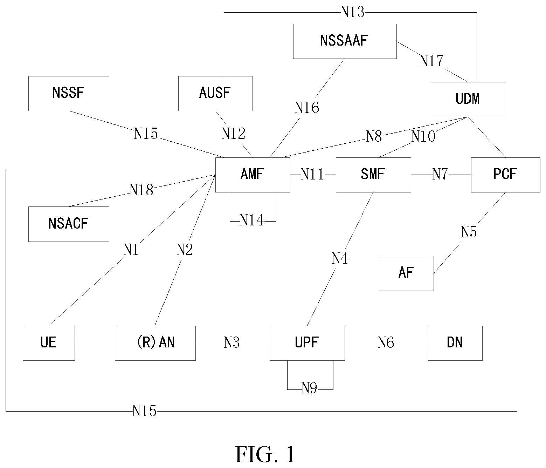

It should be noted that the current application scenario for configuring a virtual network group in a terminal suffers from inflexible configuration. FIG. 1 shows an existing 5G system architecture, which includes UE (User Equipment), RAN (Radio Access Network), UPF (User Plane Function), DN (Destination Network), AMF (Access and Mobility Management Function), PCF (Policy Control Function), AF, NSSF (Network Slice Selection Function), AUSF (Authentication Server Function), NSSAAF (Network Slice-Specific Authentication and Authorization Function), UDM (Unified Data Management), SMF (Service Management Function), and NSACF (Network Slice Admission Control Function).

Typically, an SMF can serve as a management center, and a VNGroup (Virtual Network Group) may be selected by the SMF for a UE, so that the user terminal can communicate with other terminals in the virtual network group, NFs (Network Functions) associated with the SMF include AMF, PCF, UDM, and UPF, wherein N1-N18 are identifiers indicating communication interactions between the above functions.

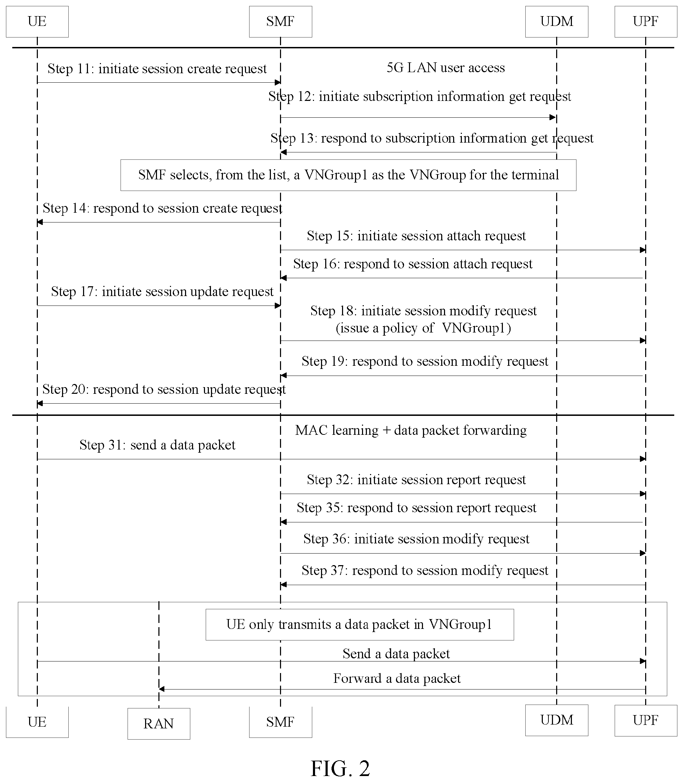

In some cases, based on the above 5G system framework, the process of configuring a virtual network group for a terminal mainly involves communication interactions between UE, SMF, UPF, and UDM, the specific interaction flow may be referred to FIG. 2. FIG. 2 is a schematic flowchart of a solution in the related art for enabling a terminal to join a virtual network group, the main steps for configuring the virtual network group for the terminal in this solution include:

The terminal (5G LAN) accesses normally.

Step 13: the UDM issues a subscribed VNGroup list.

Step 14: the SMF selects, based on the configuration, VNGroup1 as a VNGroup for the terminal from the list.

Step 18: the SMF issues forwarding rules for VNGroup1.

Ultimately, the user can only communicate in VNGroup1.

That is, in this solution, after terminal access, SMF needs to select a virtual network group for the terminal, in this process, the SMF needs to receive a corresponding VNGroup list, subscribed by the terminal, issued by the UDM, the SMF may select, based on the current configuration of the terminal, VNGroup1 from the VNGroup list as the virtual network group to be joined by the terminal, meanwhile, the SMF issues forwarding rules for VNGroup1 to notify a corresponding UPF that the current terminal has joined VNGroup1, and a message sent by the terminal needs to be forwarded to the VNGroup1.

In summary, in some cases, the core network configures a virtual network group for a UE mainly by information interactions between UE, CPE (Customer Premise Equipment), RAN, AMF, SMF, UDM, and UPF. Generally, a corresponding request actively initiated by the UE is used as a trigger condition, the SMF analyzes and responds to the information or other request content sent by the UE, retrieves a corresponding virtual network group list from the UDM, selects a virtual network group from the list, and adds the terminal to the virtual network group, thereby achieving allocation of virtual network. However, in this solution, the terminal cannot autonomously select a virtual network group.

Therefore, there are the following drawbacks in such cases: the virtual network group of the terminal is determined by the core network (UDM, SMF), configuration is inflexible. At the same time, after the core network selects a virtual network group, the terminal cannot switch a virtual network group, which is not conducive to the terminal using various types of services.

To solve the above problems, the present embodiment proposes a method for enabling a terminal to select a virtual network group, based on the existing 5G communication framework, this method allows the terminal to autonomously select a virtual network group to join, that is, the terminal determines, based on its own needs, a virtual network group to join, thereby achieving flexible configuration of the virtual network group required by the terminal.

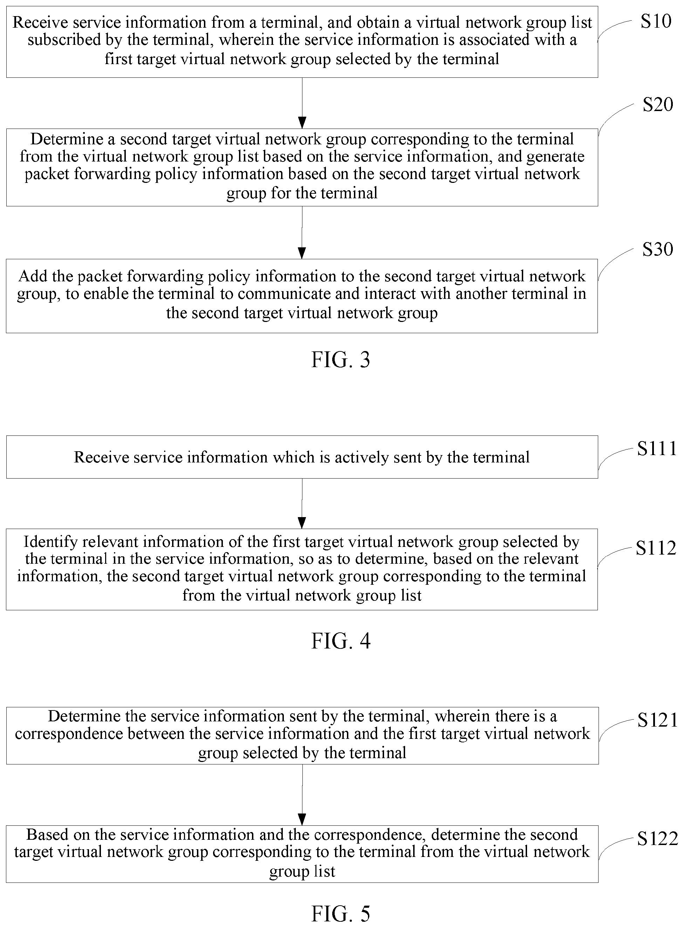

FIG. 3 is a schematic flowchart of a first embodiment of a virtual network group configuration method of the present application, as shown in FIG. 3, the virtual network group configuration method includes the following steps.

At step S10, service information is received from a terminal, and a virtual network group list subscribed by the terminal is obtained, where the service information is associated with a first target virtual network group selected by the terminal.

In this embodiment, the terminal sends service information to a core network, where the service information is associated with the first target virtual network group selected by the terminal, the first target virtual network group is a virtual network group selected by the terminal based on its own needs, that is, the information sent by the terminal in this embodiment carries the virtual network group that the terminal has decided to join based on its own needs, and the service information is used to indicate an SMF to select, from a virtual network group list, a virtual network group matching the first target virtual network group.

It should be noted that the service information may be information associated with the first target virtual network group, for example, a field added to the service information to specify the first target virtual network group. In addition, the service information may also be identification information related to the first target virtual network group, for example, the service information may be an ID of the first virtual network group, thereby ensuring that the SMF can determine, by the service information, the virtual network group currently selected or required by the terminal.

It will be appreciated that in the core network, by information interaction between the SMF and the UDM, the SMF can obtain, from the UDM, a corresponding virtual network group list, which is a collection list of all virtual network groups subscribed by the current terminal.

At step S20, a second target virtual network group corresponding to the terminal is determined from the virtual network group list based on the service information, and packet forwarding policy information based on the second target virtual network group for the terminal is generated.

It will be appreciated that after the virtual network group list is obtained, a proper second target virtual network group may be selected from the list based on the service information.

The process of selecting the second target virtual network group is equivalent to selecting, from the list, a network group matching the first target virtual network group, the second target virtual network group may be the same as the first target virtual network group, or may be a network group closest to the first target virtual network group.

The difference between the first target virtual network group and the second target virtual network group is that the first target virtual network group is a network group corresponding to the service information, or corresponding to identification information carried in the service information, while the second target virtual network group is a corresponding network group in the list.

It will be appreciated that based on the packet forwarding policy information, the UPF forwards the information sent by the terminal to the second target virtual network group corresponding to the packet forwarding policy information when the UPF receives the information from the terminal, so that the terminal can interact with another terminal in the second target virtual network group. That is, the packet forwarding policy is generated based on the second target virtual network group, such that the UPF knows the virtual network group that the current terminal expects to join.

At step S30, the packet forwarding policy information is added to the second target virtual network group, wherein the second target virtual network group to which the packet forwarding policy information is added is used by the terminal to communicate and interact with another terminal.

It will be appreciated that after the second target virtual network group is determined, it may be determined that the second target virtual network group is a network group determined based on the terminal's selection, and the terminal may be added to the second target virtual network group, so that the terminal can communicate and interact with other terminals in the second target virtual network group.

It will be appreciated that by adding the packet forwarding policy information to the corresponding second target virtual network group, the UPF and the second target virtual network group can know that the current terminal needs to communicate and interact with other terminals in the second target virtual network group.

In this embodiment, service information is received from a terminal, and a virtual network group list subscribed by the terminal is obtained, wherein the service information is associated with a first target virtual network group selected by the terminal; based on the service information, a second target virtual network group corresponding to the terminal is determined from the virtual network group list, and packet forwarding policy information based on the second target virtual network group for the terminal is generated; and the packet forwarding policy information is added to the second target virtual network group, wherein the second target virtual network group to which the packet forwarding policy information is added is used by the terminal to communicate and interact with another terminal. That is, based on the service information sent by the terminal, the second target virtual network group corresponding to the terminal is selected, and the packet forwarding policy information based on the second target virtual network group for the terminal is generated, thereby achieving the effect that the terminal communicates and interacts with other terminals in the second target virtual network group, and that the terminal autonomously selects a virtual network group.

FIG. 4 is a second embodiment of the virtual network group configuration method of the present application based on the first embodiment, as shown in FIG. 4. in this embodiment, step S10 includes the following.

At step S111, service information which is actively sent by the terminal is received.

It will be appreciated that the service information is information associated with the first target virtual network group, and an association between the service information and the first target virtual network group may be established by carrying relevant information of the first target virtual network group in the service information.

At step S112, relevant information of the first target virtual network group selected by the terminal is identified from the service information, wherein the relevant information is used to determine wherein the relevant information is used to determine the second target virtual network group corresponding to the terminal from the virtual network group list.

It will be appreciated that after receiving the service information, the service information may be identified to obtain relevant information, of the first target virtual network group selected by the terminal, from the service information, so that the corresponding second target virtual network group may be matched and obtained from the virtual network group list based on the relevant information.

The relevant information may refer to identification information, ID information, or other field information used to establish a connection between the virtual network groups.

In order to achieve the effect of selecting the second target virtual network group from the virtual network group list, additional information should be added to the virtual network group list. By this additional information is used to indicate the attributes, IDs, or other meanings corresponding to each virtual network group in the virtual network group list, so that based on the service information and the additional information in the virtual network group list, the SMF can match the second target virtual network group.

It should be noted that the core network side can identify the relevant information by the UPF, in this embodiment, a prerequisite for the core network side to identify the relevant information is that when the terminal sends corresponding service information, the terminal needs to carry the relevant information actively, so as to notify the core network side. By actively reporting the relevant information, the current terminal side has an expectation to select the corresponding target virtual network group.

In some cases, the service information carries relevant information of the first target virtual network group, so that the core network selects the corresponding second target virtual network group from the virtual network group list after receiving the service information. The virtual network group list needs to carry a list identifier corresponding to the virtual network group list, wherein the list identifier has a mapping relationship with the service information.

It will be appreciated that this is equivalent to adding, to the service information, information for determining the first target virtual network group, and also adding, to the virtual network group list, information matching that in the service information, so that after receiving the service information, the SMF can select, from the virtual network group list, a virtual network group matching the service information.

In some cases, the matching process is as follows: upon the condition that the service information matches the list identifier, the second target virtual network group is determined from the virtual network group list corresponding to the service information.

For example, taking the case where the terminal has subscribed to three virtual network groups in advance, the network groups in the virtual network group list composed of these three virtual network groups may be marked as VNGroup1, VNGroup2, and VNGroup3, respectively. Similarly, corresponding identifiers are added to the service information. For example, VNGroup1 is added to the service information. Then, it can be determined that the virtual network group corresponding to the identifier VNGroup1 is the group that the terminal needs to select.

In this embodiment, service information actively sent by the terminal is received and, relevant information of the first target virtual network group selected by the terminal can be identified from the service information, wherein the relevant information is used to determine the second target virtual network group corresponding to the terminal from the virtual network group list. The core network side can actively identify the relevant information of the first target virtual network group selected by the terminal, and use the relevant information to match the corresponding second target virtual network group, thereby achieving the effect of precisely selecting a virtual network group.

FIG. 5 is a third embodiment of the virtual network group configuration method of the present application based on the first embodiment, as shown in FIG. 5, in this embodiment, step S10 further includes the following.

At step S121, the service information sent by the terminal is determined, wherein there is a correspondence between the service information and the first target virtual network group selected by the terminal.

It will be appreciated that the service information, has a correspondence with the first virtual network group, the service information may refer to a specific field or other content data, so that the service information, indicates the service currently used by the terminal.

For example, the service information is "load", indicating a loading service.

In this embodiment, the core network includes a UPF and an SMF, and the step of receiving service information from a terminal includes that: the UPF actively identifies the service information sent by the terminal, and based on the service information actively identified by the UPF, the SMF selects, the second target virtual network group corresponding to the terminal.

The core network includes the UPF and the SMF, and a recognition function for the UPF to actively identify service information may be configured, as a result, after the terminal reports corresponding service information, the UPF can actively identify the service information and forward the identified service information to the SMF, enabling the SMF to make selection subsequently.

In this embodiment, prior to the step of determining, by the UPF, the service information sent by the terminal, the method further includes that: the SMF sends indication information indicating the UPF to report the service information determined by the UPF, and the service information reported by the UPF is received, and based on the service information reported by the UPF the SMF determines the second target virtual network group corresponding to the terminal from the virtual network group list.

It should be noted that when the reporting function of the UPF is configured, the SMF needs to send a corresponding instruction to indicate the UPF to report content corresponding to the identified service information.

At step S122, based on the service information and the correspondence, the second target virtual network group corresponding to the terminal is determined from the virtual network group list.

It will be appreciated that the second target virtual network group corresponding to the service information can be determined based on the service information and the correspondence, therefore, the corresponding second target virtual network group can be determined from the virtual network group list based on the service information and the correspondence.

In some cases, this embodiment is combined with the above embodiments, it can be seen that the corresponding second target virtual network group is directly selected from the virtual network group list mainly based on the relevant information or service information corresponding to the first target virtual network group in the service information, thereby achieving the effect of precisely selecting a virtual network group, so as to ensure flexible configuration of the virtual network group.

The virtual network group list carries a list identifier corresponding to the virtual network group list, wherein the list identifier has a mapping relationship with a service identifier. In some cases, based on the list identifier, the step of determining, based on the service information, the second target virtual network group corresponding to the terminal from the virtual network group list includes that: upon the condition that the service information matches the list identifier, the second target virtual network group corresponding to the service identifier is determined from the virtual network group list as the second target virtual network corresponding to the terminal.

It will be appreciated that the service identifier refers to identification information corresponding to the service information, for example, by marking a service as "1", "1" is used to indicate that the current service is a loading service.

It will be appreciated that the virtual network group list contains a plurality of target virtual network groups, therefore, a list identifier may also be correspondingly added for the service corresponding to the target virtual network group, such that the second target virtual network corresponding to the terminal can be selected from the virtual network group based on the correspondence among the list identifier, the service information, and the service identifier.

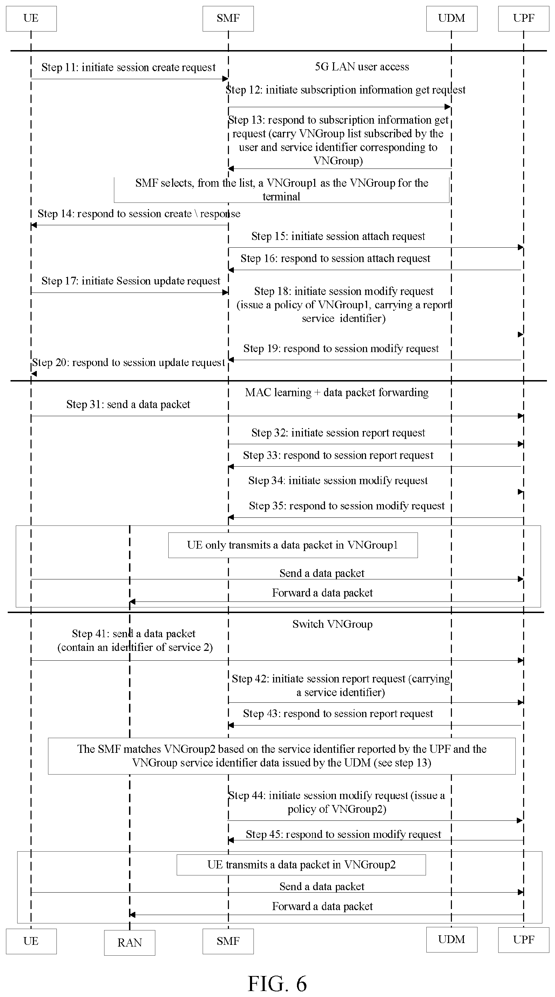

In some cases, FIG. 6 is a schematic flowchart of an interaction process for determining a virtual network group by a UPF, the specific implementation for determining a virtual network group by a UPF in FIG. 6 involves interaction ends on the UE side and the core network side, including UE, CPE, RAN, AMF, SMF, UDM, and UPF, the corresponding process includes the following.

At step 11: the UE sends a PDUSession_CreateSMContext Request (session create request) to the SMF. At this time, the UE intends to join a corresponding virtual network group, and the UE needs to initiate the session create request.

At step 12: the SMF sends a Nudm_SDM_Get Request (subscription information get request) to the UDM. At this time, the SMF needs to obtain the VNGroup list subscribed by the terminal, and needs to send the subscription get information request to the UDM.

At step 13: the UDM sends a Nudm_SDM_Get Response (subscription information get response) to the SMF, carrying the VNGroup list subscribed by the user. At this time, the UDM responds to the subscription information get request sent by the SMF and issues a corresponding VNGroup list, and the UDM needs to feedback the corresponding response information. When the UDM feeds back the corresponding virtual network list, a field which carries the list identifier corresponding to each VNGroup needs to be added to achieve subsequent selection of the corresponding VNGroup by the SMF. The list identifier is shown in Table 1.

**Table 1: Table of List Identifier**

| Information Element | Type | Condition | Description |
|---|---|---|---|
| businessIDs | String Array | C (conditionally optional) | Used to indicate the service identifier corresponding to the VNGroup |

Regarding step 13, it should be noted that in some cases, the UDM only sends the virtual network group list to the SMF, and the SMF selects from the virtual network group list a virtual network group as the one to be joined by the terminal, whereas in this embodiment, the service information sent by the terminal is associated with the virtual network group, and a corresponding field is also added to the virtual network group list sent by the UDM, so that the service information can match the corresponding list identifier in the virtual network group list, thereby enabling the SMF to precisely select a virtual network group suitable for the current terminal.

At step 14: the SMF selects, from the list, oneVNGroup1 as the VNGroup for the terminal, and sends a PDUSession_CreateSMContext Response (session create response) to the UE. At this time, the SMF needs to respond to the UE's request and feedback the response information.

At step 15: the SMF sends a PFCP Session Establishment Request (session attach request) to the UPF, at this time, the SMF needs to configure a corresponding virtual network group for the UE and needs to initiate a session attach request to the UPF.

At step 16: the UPF sends a PFCP Session Establishment Response (session attach response) to the SMF, at this time, the UPF needs to feedback the session attach response.

At step 17: the UE sends a Nsmf_PDUSession_UpdateSMContext Request (session update request) to the SMF, at this time, the UE initiates a new session request, that is, sends the session update request to the SMF.

At step 18: the SMF sends a PFCP Session Modification Request (session modify request) to the UPF, issuing the data forwarding policy for VNGroup1. In this forwarding policy, the UPF needs to be instructed to configure a reporting function, and a flag bit needs to be added to the message to indicate that the UPF needs to report the identifier. This is shown in Table 2.

**Table 2: Table of Report Identifier**

| Information Element | Type | Condition | Description |
|---|---|---|---|
| btReportBusinessID | boolean | C (conditionally optional) | Whether to report the service identifier |

Regarding step 18, it should also be noted that in this embodiment, in addition to that the SMF selects a virtual network group to be joined by the current terminal based on the service information actively reported by the terminal, the UPF may also actively identify the content of the service information sent by the terminal, thereby selecting the virtual network group to be joined by the terminal by combining the active identification result of the UPF. Therefore, in order to achieve the active reporting function of the UPF, when the SMF issues the data forwarding policy, the UPF is directly indicated to configure the reporting function, and a flag bit needs to be added to the message to indicate that the UPF needs to report the identifier.

At step 19: the UPF sends a PFCP Session Modification Response (session modify response) to the SMF, at this time, the UPF needs to feedback the session modify response.

At step 20: the SMF sends a Nsmf_PDUSession_UpdateSMContext Response (session update response) to the UE, at this time, the SMF needs to feedback the session update response.

At step 31: the UE sends a data packet to the UPF.

At step 32: the UPF sends a PFCP Session Report Request (session report request) to the SMF, at this time, the SMF receives the data packet and needs to send a corresponding session report request to the UPF to report the MAC.

At step 33: the SMF sends a PFCP Session Report Response (session report response) to the UPF, at this time, the UPF needs to feedback the session report response.

At step 34: the SMF sends a PFCP Session Modification Request (session modify request) to the UPF, at this time, the SMF selects a corresponding VNGroup1 based on the VNGroup list and configures the terminal with VNGroup1, and initiates a session modify request to the UPF to update the data forwarding rules.

At step 35: the UPF sends a PFCP Session Modification Response (session modify response) to the SMF, at this time, the UPF needs to feedback the session modify response.

Then, the UE can transmit data packets in VNGroup1.

At step 41: the UE sends a data packet to the UPF, which contains an identifier for another service, service 2. For example: the packet header data is 0x75, 0x6E, 0x6C, 0x6F, 0x61, 0x64, which corresponds to "unload", indicating an unloading service.

Regarding step 41, it should be noted that when the terminal uploads service information, the core network may select a corresponding virtual network group based on the service information sent by the terminal, therefore, specifications for the packet header data of the corresponding service information may be predetermined, and a mapping relationship between the packet header data and the corresponding service may be established, so that after the terminal sends the corresponding service information, a corresponding virtual network group can be directly selected based on the service information, thereby achieving flexible configuration.

At step 42: the UPF identifies this type of packet and sends a PFCP Session Report Request (session report request) to the SMF. A field needs to be added to this message, and the field carries an identifier obtained by the UPF by identifying the service information. This is shown in Table 3.

**Table 3: Service-related Identifiers**

| Information Element | Type | Condition | Description |
|---|---|---|---|
| businessID | String | C (conditionally optional) | Service Identifiers |

Regarding step 42, it should be noted that the UPF can actively identify the service content corresponding to the service sent by the terminal currently, at this time, after the UPF identifies it, the UPF also needs to send the identification result to the SMF, so that the SMF can select, from the virtual network group list, the virtual network group corresponding to the service used by the terminal. At the same time, in order to achieve the effect of sending the identification result, a corresponding field needs to be added to the information sent by the UPF to the SMF, and the field carries the result identified by the UPF.

At step 43: the SMF sends a PFCP Session Report Response (session report response) to the UPF.

At step 44: the SMF matches VNGroup2 based on the service identifier reported by the UPF and the VNGroup service identifier data issued by the UDM (see step 13), and sends a PFCP Session Modification Request (session modify request) to the UPF, issuing the packet forwarding policy of VNGroup2.

Regarding step 44, it should be noted that according to the above steps, the SMF receives the service identifier reported by the UPF and the service identifier data of the network groups issued by the UDM, at this time, the SMF can match a virtual network group corresponding to the current terminal's service identifier from the virtual network groups based on the above two service identifiers and service identifier data, so that the SMF can generate a new packet forwarding policy based on the newly matched virtual network group, at this time, the packet forwarding policy needs to be forwarded to the UPF, so that the UPF can forward, based on the packet forwarding policy, the information sent by the terminal to the corresponding virtual network group.

At step 45: the UPF sends a PFCP Session Modification Response (session modify response) to the SMF.

The UE switches from VNGroup1 to VNGroup2, and the UE can transmit data packets in VNGroup2.

It should be noted that the interaction process illustrated in FIG. 6 is equivalent to a process that firstly the SMF determines a virtual network group from the virtual network group list (which is not the target virtual network selected by the terminal), the service information involved in the service information is identified by the UPF, a matched second target virtual network group is selected from the virtual network group list based on the identifier corresponding to the service information, and the second target virtual network group is used to replace the initially selected virtual network group, thereby achieving the effect of flexibly configuring a virtual network group.

In addition, a message field is configured in the service information, and based on the message field, the SMF selects the second target virtual network group corresponding to the terminal, wherein the message field is used to carry relevant information of the first target virtual network group selected by the terminal.

It will be appreciated that the relevant information and the service information serve as reference information by which the SMF selects the virtual network group, and are additional information content added in this embodiment compared to the related art, therefore, this is equivalent to that relevant information corresponding to the first target virtual network group and the message field corresponding to the service information are additionally configured in the information which is sent from the UE to the SMF/UPF in the related art, and the message field is used to add the above two types of information.

The message field may be a field of packet header data or a control plane data field, that is, the service information can be directly transmitted to the corresponding interaction end as data of packet transmission, or the service information can be used as data of a control plane to specify the interaction end with which the UE transmits data.

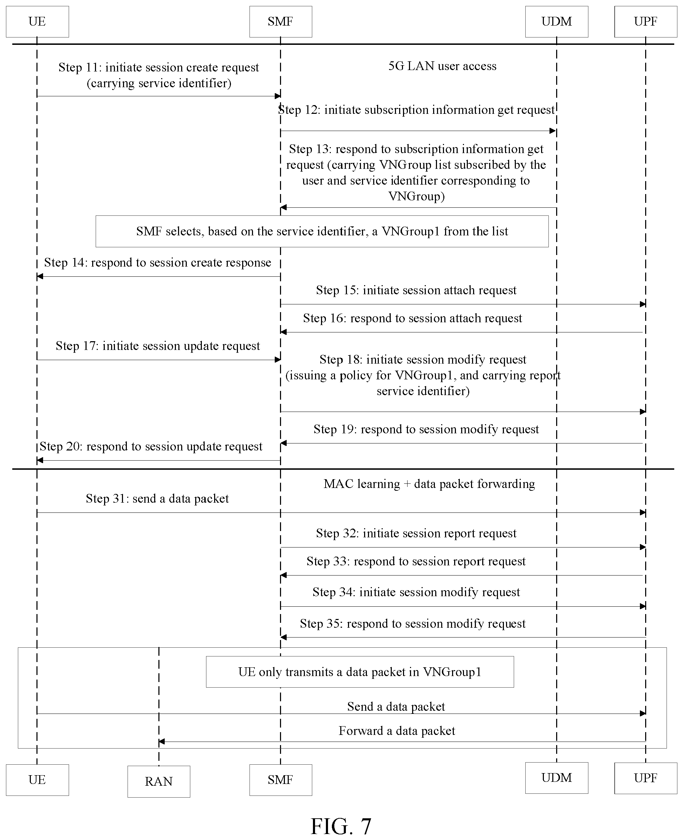

In some cases, FIG. 7 is a schematic flowchart of an interaction process for precisely selecting a virtual network group, the specific implementation for determining a virtual network group above involves interaction ends on the UE side and the core network side, including UE, CPE, RAN, AMF, SMF, UDM, and UPF, the corresponding process includes the following .

At step 11: the UE sends a PDUSession_CreateSMContext Request (session create request) to the SMF. It should be noted that when the UE sends the corresponding information, a field needs to be added to carry the service identifier, for example, carrying "load" to indicate a loading service. This is shown in Table 3.

Regarding step 11, it should be noted that when the terminal sends corresponding service information to the SMF, the terminal actively reports information, so that the SMF can select the virtual network group matching the terminal. Therefore, in addition to the information content normally needed for interaction, a corresponding service identifier also needs to be added to the information uploaded by the terminal, thereby ensuring that the SMF can determine the virtual network group specified by the current terminal.

At step 12: the SMF sends a Nudm_SDM_Get Request (subscription information get request) to the UDM.

At step 13: the UDM sends a Nudm_SDM_Get Response (subscription information get response) to the SMF, which carries the VNGroup list subscribed by the user. It should be noted that when the UDM feeds back the VNGroup list, a field needs to be added to carry the list identifier corresponding to each VNGroup to achieve subsequent selection of the corresponding VNGroup by the SMF. This is shown in Table 1.

At step 14: the SMF selects, based on the service identifier, VNGroup1 from the VNGroup list as the VNGroup for the terminal, and sends a PDUSession_CreateSMContext Response (session create response) to the UE.

At step 15: the SMF sends a PFCP Session Establishment Request (session attach request) to the UPF.

At step 16: the UPF sends a PFCP Session Establishment Response (session attachresponse) to the SMF.

At step 17: the UE sends a Nsmf_PDUSession_UpdateSMContext Request (session update request) to the SMF.

At step 18: the SMF sends a PFCP Session Modification Request (session modify request) to the UPF, issuing the data forwarding policy for VNGroup1.

At step 19: the UPF sends a PFCP Session Modification Response (session modify response) to the SMF.

At step 20: the SMF sends a Nsmf_PDUSession_UpdateSMContext Response (session update response) to the UE.

At step 31: the UE sends a data packet to the UPF.

At step 32: the UPF sends a PFCP Session Report Request (session report request) to the SMF, reporting MAC.

At step 33: the SMF sends a PFCP Session Report Response (session report response) to the UPF.

At step 34: the SMF sends a PFCP Session Modification Request (session modify request) to the UPF, updating the data forwarding rules.

At step 35: the UPF sends a PFCP Session Modification Response (session modify response) to the SMF.

At this point, the UE can transmit data packets in VNGroup1.

It should be noted that the process illustrated in FIG. 7 mainly involves selecting, from a virtual network group list, a proper second virtual network group based on the relevant information of the first target virtual network group carried in the service information, which achieves the effect of precise configuration, avoids switching virtual network groups, and improves efficiency of virtual network group configuration.

In this embodiment, the service information sent by the terminal is determined, wherein there is correspondence between the service information and the first target virtual network group selected by the terminal, and based on the service information and the correspondence, the second target virtual network group corresponding to the terminal is determined from the virtual network group list, the service information can be correspondingly identified, and the correspondence between the service information and the corresponding first target virtual network group can be determined, so that based on the correspondence and the service information, the second target virtual network group corresponding to the terminal can be selected from the virtual network group list, thereby improving the effect of actively identifying service information and selecting a proper virtual network group for the terminal.

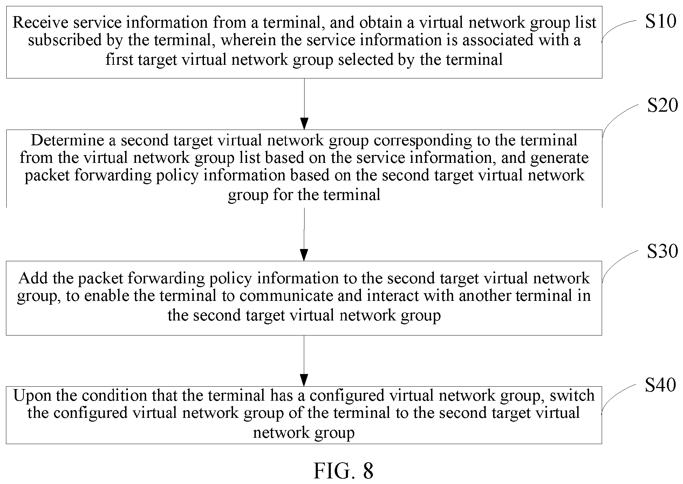

FIG. 8 is a fourth embodiment of the virtual network group configuration method of the present application based on the first, second, and third embodiments, as shown in FIG. 8, in this embodiment, the method further includes the following.

At step S40, upon the condition that the terminal has a configured virtual network group, the configured virtual network group of the terminal is switched to the second target virtual network group.

It will be appreciated that when the terminal uses a virtual network group, different virtual network groups correspond to different services, for example, the virtual network group 1 may correspond to a loading service, and the virtual network group 2 may correspond to an unloading service, the current terminal communicates with another terminal by the virtual network group 1 to handle a loading service. After the loading service is completed, the terminal may intend to communicate with another terminal by the virtual network group 2 to handle a unloading service. The terminal needs to switch to different virtual network groups to interact with different terminals and handle different services.

Therefore, when the second target virtual network group is determined, there may be a case where the terminal has been configured with a corresponding virtual network group, at this time, it is necessary to switch the virtual network group configured for the terminal to the second target virtual network group, so that the terminal selects a proper virtual network group, and flexible configuration of the virtual network group is achieved.

In some cases, when the terminal has a configured virtual network group, a packet forwarding policy for the target virtual network group is generated based on the service information, based on the packet forwarding policy, the configured virtual network group of the terminal is switched, to the second target virtual network group, and packet information initiated by the terminal is forwarded in the target virtual network group.

It will be appreciated that after the UPF receives the information sent by the UE, the packet forwarding policy is used to indicate the UPF to forward information sent by the UE to a corresponding terminal by the virtual network group specified by the packet forwarding policy.

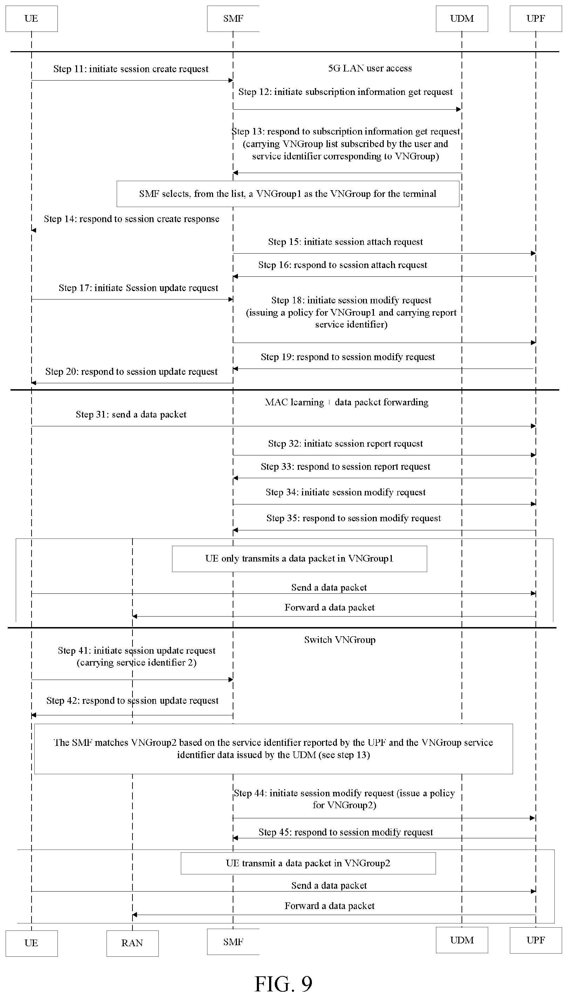

FIG. 9 is a schematic flowchart of an interaction process for switching a virtual network group, the specific implementation for switching a virtual network group above involves interaction ends on the UE side and the core network side, including UE, CPE, RAN, AMF, SMF, UDM, and UPF, and the corresponding process includes the following.

At step 11: the UE sends a PDUSession_CreateSMContext Request (session create request) to the SMF.

At step 12: the SMF sends a Nudm_SDM_Get Request (subscription information get request) to the UDM.

At step 13: the UDM sends a Nudm_SDM_Get Response (subscription information get response) to the SMF, which carries the VNGroup list subscribed by the user. A field needs to be added to carry the list identifier corresponding to each VNGroup for subsequent selection of the corresponding VNGroup by the SMF. This is shown in Table 1.

At step 14: the SMF selects, from the list, a VNGroup1 as the VNGroup for the terminal, and sends a PDUSession_CreateSMContext Response (session create response) to the UE.

At step 15: the SMF sends a PFCP Session Establishment Request (session attach request) to the UPF.

At step 16: the UPF sends a PFCP Session Establishment Response (session attach response) to the SMF.

At step 17: the UE sends a Nsmf_PDUSession_UpdateSMContext Request (session update request) to the SMF.

At step 18: the SMF sends a PFCP Session Modification Request (session modify request) to the UPF, issuing the data forwarding policy for VNGroup1.

At step 19: the UPF sends a PFCP Session Modification Response (session modify response) to the SMF.

At step 20: the SMF sends a Nsmf_PDUSession_UpdateSMContext Response (session update response) to the UE.

At step 31: the UE sends a data packet to the UPF.

At step 32: the UPF sends a PFCP Session Report Request (session report request) to the SMF, reporting the MAC.

At step 33: the SMF sends a PFCP Session Report Response (session report response) to the UPF.

At step 34: the SMF sends a PFCP Session Modification Request (session modify request) to the UPF, updating the data forwarding rules.

At step 35: the UPF sends a PFCP Session Modification Response (session modify response) to the SMF.

At this point, the UE can transmit data packets in VNGroup1.

At step 41: the UE sends a PDUSession_UpdateSMContext Request (session update request) to the SMF, a field needs to be added to carry a service identifier, for example, carrying "unload" to indicate an unloading service. This is shown in Table 3.

At step 42: the SMF sends a PDUSession_UpdateSMContext Response (session update response) to the UE.

At step 43: the SMF matches VNGroup2 based on the service identifier reported by the UPF and the VNGroup service identifier data issued by the UDM (see step 13), and sends a PFCP Session Modification Request (session modifyication request) to the UPF, issuing the packet forwarding policy for VNGroup2.

At step 44: the UPF sends a PFCP Session Modification Response (session modify response) to the SMF.

At this point, the UE switches from VNGroup1 to VNGroup2, and the UE can transmit data packets in VNGroup2.

It should be noted that the process corresponding to FIG. 9 mainly involves that the terminal switches to another service in a subsequent process after using virtual network group 1, at this time, the virtual network group added to the terminal needs to be switched correspondingly, for example, being switched from a virtual network group 1 to a virtual network group 2. Therefore, in the process that the terminal uses a corresponding service, the virtual network group configured for the terminal is switched based on change of the service used by the terminal, thereby achieving flexible configuration of a virtual network group.

In this embodiment, upon the condition that the terminal has a configured virtual network group, the configured virtual network group of the terminal is switched to the second target virtual network group, thereby achieving the effect of flexibly configuring a virtual network group for the terminal.

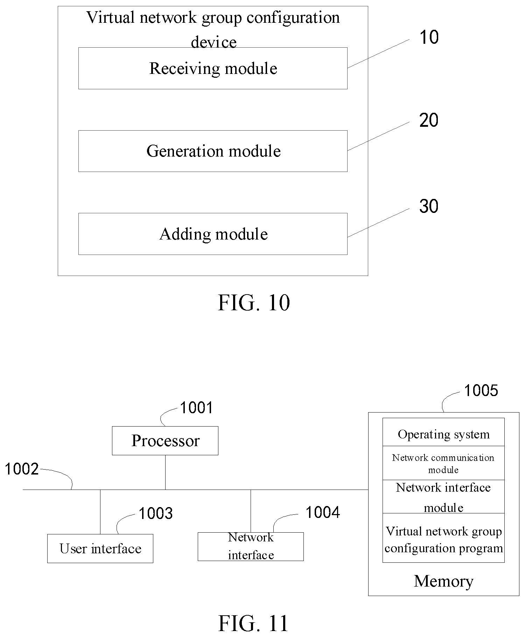

In addition, an embodiment of the present application further provides a virtual network group configuration device, FIG. 10 is a structural block diagram of an embodiment of the virtual network group configuration device, as shown in FIG. 10, the virtual network group configuration device includes the following modules.

A receiving module 10 is configured to receive service information from a terminal, and obtain a virtual network group list subscribed by the terminal, wherein the service information is associated with a first target virtual network group selected by the terminal; a generation module 20 is configured to determine, based on the service information, a second target virtual network group corresponding to the terminal from the virtual network group list, and generate packet forwarding policy information based on the second target virtual network group for the terminal; and an adding module 30 is configured to add the packet forwarding policy information to the second target virtual network group, wherein the second target virtual network group to which the packet forwarding policy information is added is used by the terminal to communicate and interact with another terminal.

In this embodiment, service information is received from a terminal, and a virtual network group list subscribed by the terminal is obtained, wherein the service information is associated with a first target virtual network group selected by the terminal; based on the service information, a second target virtual network group corresponding to the terminal is determined from the virtual network group list, and packet forwarding policy information based on the second target virtual network group for the terminal is generated; and the packet forwarding policy information is added to the second target virtual network group, wherein the second target virtual network group to which the packet forwarding policy information is added is used by the terminal to communicate and interact with another terminal. That is, based on the service information sent by the terminal, the second target virtual network group corresponding to the terminal is selected, and the packet forwarding policy information based on the second target virtual network group for the terminal is generated, thereby achieving the effect that the terminal communicates and interacts with other terminals in the second target virtual network group, and that the terminal autonomously selects a virtual network group.

It should be noted that the various modules in the above device may be used to implement the individual steps in the above method, while achieving corresponding technical effects, which will not be repeated in this embodiment.

FIG. 11 is a schematic structural diagram of a hardware operating environment of a device according to an embodiment of the present application, as shown in FIG. 11, the device may include: a processor 1001, such as a CPU, a communication bus 1002, a user interface 1003, a network interface 1004, and a memory 1005. The communication bus 1002 is used to implement connection and communication among these components. The user interface 1003 may include a display and an input unit such as a keyboard, optionally, the user interface 1003 may further include a standard wired interface and wireless interface. In one embodiment, the network interface 1004 may include a standard wired interface and a wireless interface (such as a WI-FI interface). The memory 1005 may be a high-speed RAM memory, or may be a stable memory (non-volatile memory), such as a disk storage. In one embodiment, the memory 1005 may also be a storage device independent of the above-mentioned processor 1001.

A person skilled in the art can understand that, the structure as shown in FIG. 11 does not constitute a limitation on the device, and the device may include more or less components than those illustrated, a combination of certain components, or different arrangement of components.

As shown in FIG. 11, the memory 1005, as a computer storage medium, may include an operating system, a network communication module, a user interface module, and a virtual network group configuration program.

In the device shown in FIG. 11, the network interface 1004 is mainly used for data communication with an external network; the user interface 1003 is mainly used for receiving input instructions from a user; the device calls, by the processor 1001, the virtual network group configuration program stored in the memory 1005, and performs the following operations: receiving service information from a terminal, and obtaining a virtual network group list subscribed by the terminal, wherein the service information is associated with a first target virtual network group selected by the terminal; determining, based on the service information, a second target virtual network group corresponding to the terminal from the virtual network group list, and generating packet forwarding policy information based on the second target virtual network group for the terminal; and adding the packet forwarding policy information to the second target virtual network group, wherein the second target virtual network group to which the packet forwarding policy information is added is used by the terminal to communicate and interact with another terminal.

In one embodiment, the processor 1001 may call the virtual network group configuration program stored in the memory 1005, and further perform the following operations: receiving service information which is actively sent by the terminal; and identifying relevant information of the first target virtual network group selected by the terminal from the service information, wherein the relevant information is used to determine to determine the second target virtual network group corresponding to the terminal from the virtual network group list.

In one embodiment, the processor 1001 may call the virtual network group configuration program stored in the memory 1005, and further perform the following operations: determining the service information sent by the terminal, wherein there is a correspondence between the service information and the first target virtual network group selected by the terminal; and based on the service information and the correspondence, determining the second target virtual network group corresponding to the terminal from the virtual network group list.

In one embodiment, the processor 1001 may call the virtual network group configuration program stored in the memory 1005, and further perform the following operations: actively identifying, by the UPF, wherein the service information actively identified by the UPF is used by the SMF to select, the second target virtual network group corresponding to the terminal.

In one embodiment, the processor 1001 may call the virtual network group configuration program stored in the memory 1005, and further perform the following operations: sending, by the SMF, indication information indicating the UPF to report the service information determined by the UPF; and receiving the service information reported by the UPF, wherein the SMF determines,, based on the service information reported by the UPF, the second target virtual network group corresponding to the terminal from the virtual network group list.

In one embodiment, the processor 1001 may call the virtual network group configuration program stored in the memory 1005, and further perform the following operations: the service information being configured with a message field, the SMF selects the second target virtual network group corresponding to the terminal according to the message field, and the message field is used to carry relevant information of the first target virtual network group selected by the terminal.

In one embodiment, the processor 1001 may call the virtual network group configuration program stored in the memory 1005, and further perform the following operations: the virtual network group list carries a list identifier corresponding to the virtual network group list, and the list identifier has a mapping relationship with a service identifier.

In one embodiment, the processor 1001 may call the virtual network group configuration program stored in the memory 1005, and further perform the following operations: upon the condition that the service information matches the list identifier, determining a second target virtual network group corresponding to the service identifier from the virtual network group list as the second target virtual network corresponding to the terminal.

In one embodiment, the processor 1001 may call the virtual network group configuration program stored in the memory 1005, and further perform the following operations: upon the condition that the terminal has a configured virtual network group, switching the configured virtual network group of the terminal to the second target virtual network group.

In one embodiment, the processor 1001 may call the virtual network group configuration program stored in the memory 1005, and further perform the following operations: generating, based on the service information, a packet forwarding policy for the target virtual network group; and switching, based on the packet forwarding policy, the configured virtual network group of the terminal to the second target virtual network group, and forwarding packet information initiated by the terminal in the target virtual network group.

In this embodiment, service information is received from a terminal, and a virtual network group list subscribed by the terminal is obtained, wherein the service information is associated with a first target virtual network group selected by the terminal; based on the service information, a second target virtual network group corresponding to the terminal is determined from the virtual network group list, and packet forwarding policy information based on the second target virtual network group for the terminal is generated; and the packet forwarding policy information is added to the second target virtual network group, wherein the second target virtual network group to which the packet forwarding policy information is added is used by the terminal to communicate and interact with another terminal. That is, based on the service information sent by the terminal, the second target virtual network group corresponding to the terminal is selected, and the packet forwarding policy information based on the second target virtual network group for the terminal is generated, thereby achieving the effect that the terminal communicates and interacts with other terminals in the second target virtual network group, and that the terminal autonomously selects a virtual network group.

In addition, the present application further proposes a computer-readable storage medium, the computer-readable storage medium stores thereon a virtual network group configuration program, the virtual network group configuration program, when executed by a processor, implements the following operations receiving service information from a terminal, and obtaining a virtual network group list subscribed by the terminal, wherein the service information is associated with a first target virtual network group selected by the terminal; determining, based on the service information, a second target virtual network group corresponding to the terminal from the virtual network group list, and generating packet forwarding policy information based on the second target virtual network group for the terminal; and adding the packet forwarding policy information to the second target virtual network group, wherein the second target virtual network group to which the packet forwarding policy information is added is used by the terminal to communicate and interact with another terminal.

In this embodiment, service information is received from a terminal, and a virtual network group list subscribed by the terminal is obtained, wherein the service information is associated with a first target virtual network group selected by the terminal; based on the service information, a second target virtual network group corresponding to the terminal is determined from the virtual network group list, and packet forwarding policy information based on the second target virtual network group for the terminal is generated; and the packet forwarding policy information is added to the second target virtual network group, wherein the second target virtual network group to which the packet forwarding policy information is added is used by the terminal to communicate and interact with another terminal. That is, based on the service information sent by the terminal, the second target virtual network group corresponding to the terminal is selected, and the packet forwarding policy information based on the second target virtual network group for the terminal is generated, thereby achieving the effect that the terminal communicates and interacts with other terminals in the second target virtual network group, and that the terminal autonomously selects a virtual network group.

It should be noted that the above computer-readable storage medium, when executed by a processor, may also implement the individual steps in the above method, while achieving corresponding technical effects, which will not be repeated in this embodiment.

It should be noted that, as used herein, the terms "include", "comprise" or any other variations thereof are intended to cover a non-exclusive inclusion, such that a process, method, article, or system that comprises a series of elements not only comprises those elements, but also comprises other elements that are not explicitly listed, or further comprises elements that are inherent to the process, method, article, or system. Without further limitations, an element limited by "comprising a ..." does not exclude the presence of other identical elements in the process, method, article, or system that comprises the element.

The numbers of embodiments in the present application are for description only and do not represent the advantages or disadvantages of the embodiments.

With the description of the above implementations, those skilled in the art can clearly understand that the above implementation methods can be effected via software and necessary general hardware platforms, as well as hardware, in many cases, the former is the preferred implementation. Based on such understanding, the technical solution of the this application essentially or the part contributing to the prior art may be embodied in the form of a software product, the computer software product is stored in a storage medium as mentioned above (such as a ROM/RAM, a magnetic disk, and an optical disk), and includes a number of instructions for instructing a terminal device (which may be a mobile phone, a computer, a server, air conditioner, or a network device) to execute the methods described in various embodiments of this application.

The above are merely preferred embodiments of the present application, and are not intended to limit the scope of the present application, any equivalent structures or equivalent process transformations made using the content of the description and drawings of the present application, or techniques that are directly or indirectly applied in other related technical fields, are also included in the scope of protection of the present application.

## Claims

1. A virtual network group configuration method, performed by a core network, comprising:
receiving service information from a terminal, and obtaining a virtual network group list subscribed by the terminal, wherein the service information is associated with a first target virtual network group selected by the terminal;
determining, based on the service information, a second target virtual network group corresponding to the terminal from the virtual network group list, and generating packet forwarding policy information based on the second target virtual network group for the terminal; and
adding the packet forwarding policy information to the second target virtual network group, wherein the second target virtual network group to which the packet forwarding policy information is added is used by the terminal to communicate and interact with another terminal.

2. The virtual network group configuration method of claim 1, wherein receiving the service information from the terminal comprises:
receiving the service information which is actively sent by the terminal; and
identifying relevant information of the first target virtual network group selected by the terminal from the service information, wherein the relevant information is used to determine the second target virtual network group corresponding to the terminal from the virtual network group list.

3. The virtual network group configuration method of claim 1, wherein after receiving the service information from the terminal, the method further comprises:
determining the service information sent by the terminal, wherein there is a correspondence between the service information and the first target virtual network group selected by the terminal; and
determining, based on the service information and the correspondence, the second target virtual network group corresponding to the terminal from the virtual network group list.

4. The virtual network group configuration method of claim 3, wherein the core network comprises a UPF and an SMF, and receiving the service information from the terminal comprises:
actively identifying, by the UPF, the service information sent by the terminal, wherein the service information actively identified by the UPF is used by the SMF to select the second target virtual network group corresponding to the terminal.

5. The virtual network group configuration method of claim 4, wherein prior to determining, by the UPF, the service information sent by the terminal, the method further comprises:
sending, by the SMF, indication information indicating the UPF to report the service information determined by the UPF; and
receiving the service information reported by the UPF, wherein the SMF determines, based on the service information reported by the UPF, the second target virtual network group corresponding to the terminal from the virtual network group list.

6. The virtual network group configuration method of any one of claims 1-5, wherein the service information is configured with a message field, wherein the SMF selects the second target virtual network group corresponding to the terminal according to the message field, and the message field is used to carry relevant information of the first target virtual network group selected by the terminal.

7. The virtual network group configuration method of claim 1, wherein the virtual network group list carries a list identifier corresponding to the virtual network group list, and the list identifier has a mapping relationship with a service identifier.

8. The virtual network group configuration method of claim 7, wherein determining, based on the service information, the second target virtual network group corresponding to the terminal from the virtual network group list comprises:
determining, upon the condition that the service information matches the list identifier, a second target virtual network group corresponding to the service identifier from the virtual network group list as the second target virtual network corresponding to the terminal.

9. The virtual network group configuration method of claim 1, wherein after determining, based on the service information, the second target virtual network group corresponding to the terminal from the virtual network group list, the method further comprises:
switching, upon the condition that the terminal has a configured virtual network group, the configured virtual network group of the terminal to the second target virtual network group.

10. The virtual network group configuration method of claim 9, wherein switching the configured virtual network group of the terminal to the second target virtual network group comprises:
generating, based on the service information, a packet forwarding policy for the target virtual network group; and
switching, based on the packet forwarding policy, the configured virtual network group of the terminal to the second target virtual network group, and forwarding packet information initiated by the terminal in the target virtual network group.

11. A virtual network group configuration device, wherein the virtual network group configuration device comprises a memory, a processor, and a virtual network group configuration program stored in the memory and executable on the processor, the virtual network group configuration program is configured to implement steps of the virtual network group configuration method of any one of claims 1 to 10.

12. A storage medium, wherein the storage medium stores thereon a program for implementing a virtual network group configuration method, the program for implementing a virtual network group configuration method, when executed by a processor, implements steps of the virtual network group configuration method of any one of claims 1 to 10.
